**Europäisches Patentamt**

**European Patent Office**

**Office européen des brevets**

(19)

(11) Veröffentlichungsnummer : **0 349 474 B1**

## (12) EUROPÄISCHE PATENTSCHRIFT

(45) Veröffentlichungstag der Patentschrift :
**20.05.92 Patentblatt 92/21**

(51) Int. Cl.⁵ : **E06B 3/96, B29C 65/02**

(21) Anmeldenummer : **89710047.5**

(22) Anmeldetag : **29.05.89**

(54) **Verfahren zum Herstellen einer Eck- oder T-Verbindung zwischen zwei Kunststoffhohlkammerprofilen eines Fensters oder einerTür.**

(30) Priorität : **31.05.88 DE 3818397**

(43) Veröffentlichungstag der Anmeldung :
**03.01.90 Patentblatt 90/01**

(45) Bekanntmachung des Hinweises auf die Patenterteilung :
**20.05.92 Patentblatt 92/21**

(84) Benannte Vertragsstaaten :
**AT BE CH DE FR GB LI NL SE**

(56) Entgegenhaltungen :
**WO-A-87/00884**
**FR-A- 1 201 457**
**FR-A- 1 233 659**

(56) Entgegenhaltungen :
**FR-A- 2 431 628**
**GB-A- 1 069 766**
**GB-A- 1 209 213**
**US-A- 3 772 843**
**US-A- 4 726 481**

(73) Patentinhaber : **SCHÜCO International KG**
**Karolinenstrasse 1-15**
**W-4800 Bielefeld 1 (DE)**

(72) Erfinder : **Höcker, Eitel-Friedrich**
**Horstkotterheide 18**
**W-4800 Bielefeld 15 (DE)**

(74) Vertreter : **Stracke, Alexander, Dipl.-Ing. et al**
**Jöllenbecker Strasse 164**
**W-4800 Bielefeld 1 (DE)**

EP 0 349 474 B1

**Beschreibung**

Die Erfindung bezieht sich auf ein Verfahren zum Herstellen einer Eck- oder T-Verbindung zwischen zwei Kunststoffhohlkammerprofilen eines Fensters oder einer Tür.

Es ist bekannt, bei den aus thermoplastischen Kunststoffprofilen hergestellten Rahmen für Fenster oder Türen die Eck- oder Sprossenverbindungen durch Schweißen herzustellen. Hierbei werden die zu verbindenden Flächen mittels eines Heizspiegels bis zu einer Tiefe von ca. 3 bis 4 mm auf eine Plastifizierungstemperatur gebracht. Nach dem Entfernen des Schweißspiegels werden die plastifizierten Flächen gegeneinandergepreßt und hierdurch miteinander verbunden. Nach dem Abkühlen der plastifizierten Profilbereiche ergibt sich ein weitgehend homogener Verbund.

Durch das Zusammenpressen der plastifizierten Flächenbereiche findet eine Materialverdrängung statt, durch die eine Schweißraupe gebildet wird, die anschließend bearbeitet werden muß.

Es sind Verfahren bekannt, bei denen die Außenzonen der zu verbindenden Kunststoffprofile im Schweißbereich mit einer Schweißraupenbegrenzung versehen sind, so daß der Schweißraupenaufbau im wesentlichen im Profilinnern stattfindet und an der Außenseite der Schweißnaht sich lediglich eine dünne Haut bildet, die relativ leicht entfernt werden kann. Lediglich im Bereich hinterschnittener Nuten ist diese Schweißraupenbegrenzung nicht möglich. Hier muß mittels entsprechender Bearbeitungsmaschinen ein nachträgliches Schweißnahtputzen erfolgen.

Sprossenschweißungen sind insofern komplizierter gegenüber reinen Gehrungsverbindungen von Rahmenteilen, da die Sprossenenden in einem 90°-Winkel spitz angeschnitten werden müssen und im zugeordneten Rahmenteil ein entsprechender V-förmiger 90°-Ausschnitt erfolgen muß. Mittels eines Winkelheizspiegels wird dann die Plastifizierung der zu verbindenden Flächen am Rahmen und am Sprossenende vorgenommen und es erfolgt dann das Aufeinanderpressen der plastifizierten Flächenbereiche.

Bei einer Verwendung dieses Verbindungsverfahrens für Sprossen muß die entstehende Schweißnaht von Hand aus nachbearbeitet werden. Eine maschinelle Putzbearbeitung wie bei Eckenverschweißungen von Rahmen ist hier nicht möglich.

Für das Einsetzen von Kunststoffsprossen in Rahmen aus thermoplastischem Kunststoff hat sich eine mechanische Verbindungstechnik durchgesetzt, die auf bei Metallfenstern üblichen Techniken beruht. Die Sprossenprofile werden entsprechend dem Rahmenfalz, in den sie stirnseitig eingesetzt werden sollen, ausgeklinkt und endseitig mit einem Verbinder versehen, der in die Sprosse eingreift und Flächen aufweist, die mit dem Falz des Rahmens durch Schrauben verbunden werden. Die Festlegung des Verbinders im Sprossenprofil selbst erfolgt mittels eines Klebers sowie einer mechanisch unterstützten Fixierung durch Schrauben, Bolzen, Klemmexzentern o.dgl.

Thermoplastische Profile für die Herstellung von Fenster- oder Türrahmen werden bei der Herstellung in den Außenkonturen exakt kalibriert. Toleranzen, die sich beim Extrusionsverfahren ergeben, wirken sich auf die Begrenzung der Innenkammern aufgrund der Wanddickenschwankungen der Profile aus. In die Innenkammern der extrudierten Kunststoffprofile eingesetzte Verbindungselemente müssen somit mit einem relativ großen Spiel gegenüber den Begrenzungsflächen der Innenkammern eingesetzt werden, damit durch zusätzliche Verbindungsmittel eine einwandfreie Ausrichtung des Verbinders erfolgen kann. Ein zu strammer Sitz eines Verbinders aufgrund einer Abstützung an den mit großen Fertigungsungenauigkeiten hergestellten Begrenzungsflächen der Innenkammer ergibt ein Schiefstellen des Verbinders zum Sprossenprofil hin und damit eine unsaubere Ausrichtung der Sprosse im Rahmen.

Es ist üblich, die Sprossenverbinder mit einem Kleber in das Sprossenprofil einzusetzen und mittels mechanischer Elemente gegenüber dem Sprossenprofil zu fixieren. Der Kleber hat die Aufgabe, die Verbindungsfestigkeit zu erhöhen und das für die Montage des Verbinders erforderliche Spiel zwischen der Innenkammer des Sprossenprofils und dem Verbinder auszugleichen und eine dauerhafte Ausrichtung des Verbinders gegenüber dem Sprossenprofil sicherzustellen.

Diese Verbindungstechnik hat den Nachteil, daß mechanische Elemente zur Lagesicherung verwendet werden müssen, die eine mechanische Bearbeitung des Sprossenprofils erfordern. Hinzu kommt der Einsatz eines Klebers, der zunächst eine Reinigung der Klebeflächen sowie eine Abbindezeit benötigt, in der das Sprossenprofil nicht weiterbearbeitet werden kann.

Mit gleichen Nachteilen ist eine Fertigung eines Rahmens aus Kunststoffhohlkammerprofilen behaftet, bei der die Eckverbindung mittels eines Eckverbinders vorgenommen wird, der in gleicher Weise wie der Sprossenverbinder mittels eines Klebers und unter Verwendung mechanischer Befestigungselemente in den die Ecke bildenden Rahmenprofilen festgelegt wird.

Es ist ferner ein Verfahren zur Aussteifung von Kunststoffprofilen bzw. Kunststoffbauteilen bekannt (GB-A-1 209 213), bei dem ein Metallstab in den Verbindungsbereichen mit mindestens einer Vertiefung oder Durchbrechung versehen, in eine Innenkammer des Kunststoffprofils eingeführt und die benachbart der Vertiefung oder Durchbrechung des Metallstabs liegende Wand des Kunststoffprofils mittels eines Stempels plastifiziert und in die Vertiefung oder Durchbrechung des Metallstabs eingedrückt wird.

Darüber hinaus wird in der GB-A-1 209 213 die Möglichkeit der Erwärmung des Stempels erwähnt, wobei die Heiztemperatur unter dem Schmelzpunkt des Kunststoffes liegen soll.

Außerdem beschreibt die FR-A-1 233 659 ein Verfahren, bei dem plastifizierbares Material eines Bauteils in eine Ausnehmung eines starren zweiten Bauteils eingeformt wird.

Der Erfindung liegt die Aufgabe zugrunde, ein Verfahren der eingangs genannten Art so zu gestalten, daß für die Verbindung zweier Kunststoffhohlprofile zusätzlich zu dem Verbinder keine weiteren mechanischen Verbindungselemente und/oder Kleber erforderlich sind.

Diese Aufgabe wird nach der Erfindung durch die Merkmale der nebengeordneten Patentansprüche 1 und 2 gelöst.

Da die Druckbelastung des plastifizierten Materials durch den Prägestempel bis zur Erstarrung des plastifizierten Materials aufrechterhalten wird, kann ein Schrumpfen oder Zurückfedern des plastifizierten Materials während der Aushärtung nicht auftreten.

Nach dem Erreichen der Erstarrungstemperatur der zuvor plastifizierten Materialien kann die weitere Verarbeitung der Sprossen bzw. der Rahmen vorgenommen werden.

Weitere Merkmale der Erfindung ergeben sich aus den Unteransprüchen.

Ausführungsbeispiele der erfindungsgemäßen Verfahren sind in den Zeichnungen dargestellt und werden im folgenden beschrieben. Es zeigen:

Fig. 1 ein Rahmenprofil sowie ein zugeordnetes Sprossenprofil, das für die Verbindung mit dem Rahmenprofil vorgesehen ist,

Fig. 2 im Grundriß eine Eckverbindung zweier Rahmenprofile,

Fig. 3 und 4 Ausführungsbeispiele für Verbindungen zwischen einer Profilwandung und der Wandung eines in die Innenkammer des Profils eingesetzten Verbinders,

Fig. 5 und 6 verschiedene Verfahrensstufen eines Verfahrens zum Verschweißen einer Profilwandung mit einem Verbinder und

Fig. 7 eine Vorrichtung zur Durchführung eines erfindungsgemäßen Verbindungsverfahrens in schematischer Darstellung.

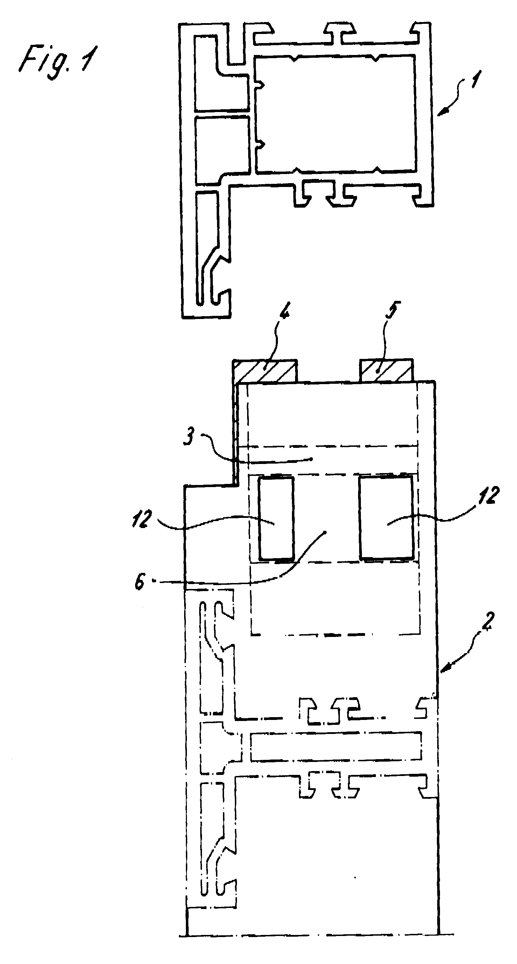

Die Fig. 1 zeigt ein Rahmenprofil 1 eines Fensters oder einer Tür sowie ein Sprossenprofil 2, das mit dem Rahmenprofil verbunden werden soll. Beide Profile sind als Hohlkammerprofile ausgebildet und aus einem thermoplastischen Kunststoff gefertigt.

Das Sprossenprofil 2 ist entsprechend der Kontur des Rahmenprofils 1 im Verbindungsbereich ausgeklinkt, damit die Sichtflächen des Rahmenprofils und des Sprossenprofils nach der Verbindung miteinander fluchten.

Die Querschnittskontur des Sprossenprofils ist in das Sprossenprofil in strichpunktierten Linien eingezeichnet. In die Innenkammer des Sprossenprofils 2 ist ein Verbinder 3 eingesetzt, der mit seinen Teilen 4,5 aus der Innenkammer ragt. Die Teile 4,5 werden für eine Verbindung mit dem Rahmenprofil 1 verwendet.

Der Verbinder 3 kann, wie in der Fig. 3 dargestellt, mit einer Vertiefung 6 ausgerüstet sein, die als Nut ausgebildet sein kann, die sich über die gesamte Breite des Verbinders 3 erstreckt. In der Fig. 3 ist die Vertiefung 6 schwalbenschwanzförmig ausgebildet und weist somit hinterschnittene Flächen 7 auf.

Zur Verbindung der Wand 8 des Sprossenprofils mit der benachbart liegenden Wand 9 des Verbinders wird mittels eines aufgeheizten Stempels 10 das der Vertiefung 6 gegenüberliegende Material der Wand 8 des Sprossenprofils plastifiziert und es wird dann der aufgeheizte Stempel 10 in eine Warteposition gefahren und ein Prägestempel 11 in die Betriebsstellung gebracht und mittels dieses Prägestempels das plastifizierte Material in die Vertiefung 6 des Verbinders 3 gedrückt. Der Prägestempel, der zusätzlich gekühlt werden kann, wird in seine Ausgangsstellung zurückfahren, nachdem das plastifizierte Material erstarrt ist.

Durch das Einformen des plastifizierten Materials aus der Wandung 8 des Sprossenprofils in die Vertiefung 6 des Verbinders 3 ergibt sich eine Aussparung 12 in dem Sprossenprofil. Zwei dieser Aussparungen 12 sind in der Fig. 1 erkennbar.

Aus der Fig. 3 folgt, daß mit dem erfindungsgemäßen Verfahren eine formschlüssige Verbindung zwischen dem Sprossenprofil und dem in die Innenkammer eingesetzten Verbinder 3 ergibt, bei deren Erstellung auch eine exakte Ausrichtung des Verbinders gegenüber dem Sprossenprofil erreicht wird, da das Verbindungsverfahren unter Verwendung einer Vorrichtung durchgeführt wird, die während des Verbindungsverfahrens die zu verbindenden Teile in einer ausgerichteten Lage zueinander hält.

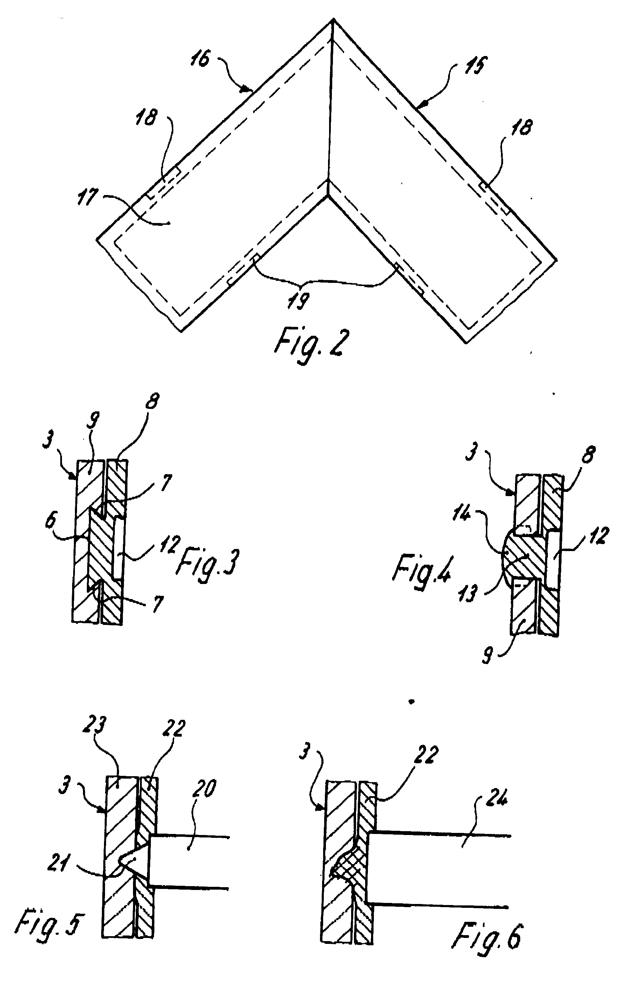

Bei dem Ausführungsbeispiel nach der Fig. 4 ist die Vertiefung in der Wandung 9 des Verbinders 3, in die plastifiziertes Material aus der Wandung 8 des Sprossenprofils eingeformt wird, als Durchbrechung 13 ausgebildet. Das durch den aufgeheizten Stempel 10 plastifizierte Material der Wandung 8 des Sprossenprofils wird mittels des Prägestempels 11 in die Durchbrechung 13 eingedrückt und bildet an der Innenseite einen Kopf 14, der den Rand der Durchbrechung hintergreift.

In der Fig. 2 sind auf Gehrung geschnittene Rahmenprofile 15,16 dargestellt, die eine Ecke bilden und auf die Schenkel eines Eckverbinders 17 gestülpt sind.

Die Schenkel des Eckverbinders 17 weisen Vertiefungen auf, in die plastifiziertes Material der Rahmenprofile eingeformt wird. Hierbei ergeben sich Aussparungen 18,19 in den Rahmenprofilen.

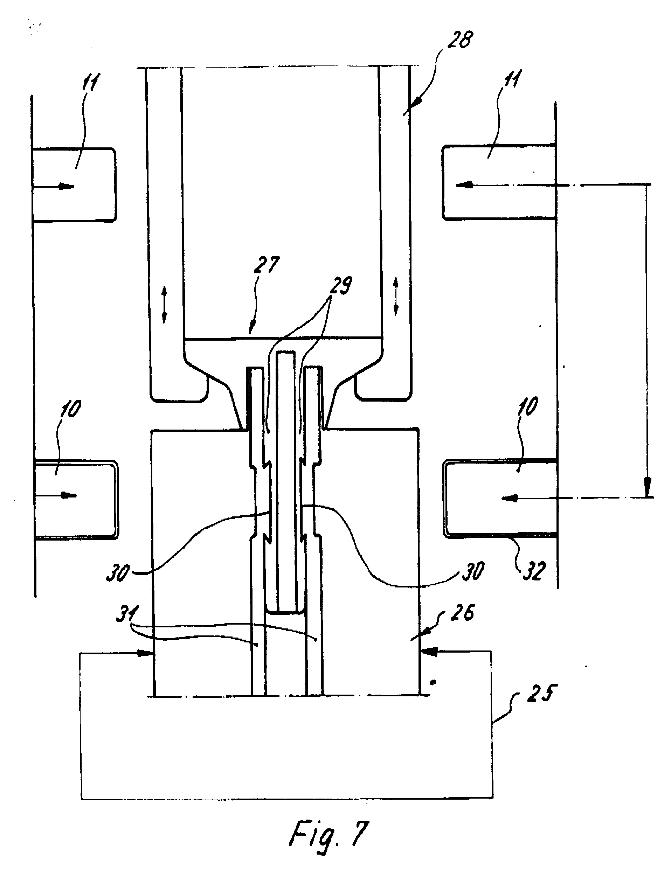

Das in den Fig. 5 und 6 aufgezeigte Verbindungsverfahren ist nur durchführbar, wenn der Verbinder 3, der in die Innenkammer des Sprossen- oder Rahmenprofils eingesetzt ist, ebenso wie das Rahmenprofil bzw. Sprossenprofil aus einem thermoplastischen Kunststoff besteht.

Die Fig. 5 zeigt den Verfahrensschritt, bei dem mittels eines aufgeheizten Stempels 20, der mit einem in einer Spitze endenden vorderen Teil 21 versehen ist, sowohl ein Teil der Wandung des Rahmen- oder Sprossenprofils 22 als auch ein Teil der Wandung 23 des Verbinders plastifiziert wird.

Der vordere Teil 21 des aufgeheizten Stempels 20 kann auch eine andere geometrische Form aufweisen als die dargestellte.

Nach der erfolgten Plastifizierung wird der Prägestempel 24 zum Einsatz gebracht, der die plastifizierten Materialien zusammenpreßt und eine örtlich begrenzte Verschweißung zwischen dem Rahmen- oder dem Sprossenprofil und dem in die Innenkammer eingesetzten Verbinder bewirkt.

Die Fig. 7 zeigt in schematischer Darstellung eine Vorrichtung zur Durchführung eines erfindungsgemäßen Verbindungsverfahrens.

Diese Vorrichtung weist ein Spannwerkzeug 25 zur Halterung des aus thermoplastischem Kunststoff gefertigten Hohlkammerprofils 26 auf, in dessen Innenkammer ein Verbinder 27 eingesetzt ist. Dieser Verbinder 27 wird an dem aus der Innenkammer des Profils 26 ragenden Teil mittels eines Spannwerkzeuges 28 gehalten und gegenüber dem Hohlkammerprofil 26 ausgerichtet. Diese exakte Ausrichtung wird bis zur Verbindung der genannten Teile miteinander aufrechterhalten.

Die in die Innenkammer des Hohlkammerprofils 26 ragenden Wandungen 29 des Verbinders sind mit Vertiefungen 30 ausgerüstet, in die, wie im vorhergehenden beschrieben, mittels des aufgeheizten Stempels 10 plastifiziertes Material der Profilwandungen 31 unter Einsatz eines Prägestempels 11 eingeformt wird. Der bzw. die Prägestempel halten das plastifizierte Material während der Abkühlungsphase unter Druck und in der eingeformten Lage. Die Abkühlungszeit kann durch eine zusätzliche Kühlung des Prägestempels 11 verkürzt werden.

Der aufheizbare Stempel 10 kann mit einer Beschichtung 32 aus Polytetrafluoräthylen (Teflon, eingetr. Warenzeichen) versehen werden, um ein Anbacken des plastifizierten Materials am aufgeheizten Stempel 10 zu vermeiden.

Bei der Vorrichtung nach der Fig. 7 sind auf jeder Seite des eingespannten Hohlkammerprofils 26 und des eingespannten Verbinders 27 je ein aufheizbarer Stempel 10 und ein Prägestempel 11 vorgesehen, so daß die Befestigung des Verbinders am Hohlkammerprofil an beiden gegenüberliegenden Seiten gleichzeitig vorgenommen werden kann. Hierdurch ergibt sich eine kurze Arbeitstaktzeit, nach der die mit dem Verbinder ausgerüsteten Profile sofort weiterbearbeitet werden können.

Das Verbindungsverfahren für die in der Fig. 2 aufgezeigte Eckverbindung arbeitet analog dem im Zusammenhang mit der Vorrichtung nach der Fig. 7 beschriebenen Verfahren.

Die beiden zu verbindenden Rahmenprofile werden zueinander in einer Vorrichtung fixiert. Der sich im Eckbereich in den Innenkammern der Rahmenprofile befindende Eckverbinder wird mittels eines aufgeheizten Stempels und eines Prägestempels in der Rahmenecke festgesetzt. Pro Profilwandung werden sowohl bei der T-Verbindung als auch bei der Eckverbindung mindestens ein aufgeheizter Stempel und mindestens ein Prägestempel eingesetzt.

Bei den erfindungsgemäßen Verfahren werden das plastifizierbare Kunststoffmaterial des Rahmenprofils bzw. des Sprossenprofils ausgenutzt und als Verbindungsmittel verwendet. Zusätzliche mechanische Arbeiten und zusätzliche mechanische bzw. chemische Elemente sind nicht erforderlich. Der Verzicht auf Reinigungsmittel und auf Kleber verbessert die Arbeitsbedingungen, da eine Lösemittelfreisetzung nicht mehr gegeben ist.

Bezugzeichen

1 Rahmenprofil
2 Sprossenprofil
3 Verbinder
4 Teil
5 Teil
6 Vertiefung
7 Fläche

8 Wand

9 Wand

10 Stempel

11 Prägestempel

12 Aussparung

13 Durchbrechung

14 Kopf

15 Rahmenprofil

16 Rahmenprofil

17 Eckverbinder

18 Aussparung

19 Aussparung

20 Stempel

21 Teil

22 Sprossenprofil

23 Wandung

24 Prägestempel

25 Spannwerkzeug

26 Profil

27 Verbinder

28 Spannwerkzeug

29 Wandung

30 Vertiefung

31 Profilwandung

32 Beschichtung

**Patentansprüche**

1. Verfahren zum Herstellen einer Eck- oder T-Verbindung swischen zwei Kunststoffhohlkammerprofilen eines Fensters oder einer Tür, wobei ein Eck- oder T-Verbinder (3,17,27) in den Verbindungsbereichen mit mindestens einer Vertiefung (6) oder einer Durchbrechung (13) versehen, in die Innenkammer eines Kunststoffrahmenprofils (15,16) oder eines Sprossenprofils (2) eingeführt und die benachbart der Vertiefung oder Durchbrechung des Verbinders liegende Wand des Rahmen- oder Sprossenprofils mittels eines aufgeheizten Stempels (10) plastifiziert und das plastifizierte Material mittels eines Prägestempels (11) in die Vertiefung (6) oder Durchbrechung (13) des Verbinders eingedrückt und während der Abkühlungsphase durch den Prägestempel (11) unter Druck und in der eingeformten Lage gehalten und der Prägestempel (11) in seine Ausgangsstellung zurückgefahren wird, nachdem das plastifizierte Material erstarrt ist.

2. Verfahren zum Herstellen einer Eck- oder T-Verbindung swischen zwei Kunststoffhohlkammerprofilen eines Fensters oder einer Tür, wobei ein aux thermoplastichem Kunststoff gefertigter Eck- oder T-Verbinder in die Innenkammer eines Kunststoffrahmen- oder Sprossenprofils eingeführt und daß an den vorgesehenen Verbindungsstellen mittels eines aufgeheizten Stempels (20) sowohl das Wandungsmaterial des Rahmen- oder Sprossenprofils und auch ein Teil des benachbarten Wandungsmaterials des Verbinders (3) plastifiziert wird und mittels eines Prägestempels (24) die plastifizierten Materialien der Wandungen des Profils und des Verbinders unter Druckbelastung miteinander verbunden und auf die Erstarrungstemperatur abgekühlt werden, und daß die Druckbelastung des plastifizierten und in den Verbinder eingeformten Materials des Rahmen- oder Sprossenprofils mittels des Prägestempels (11,24) bis zur Erstarrung des plastifizierten Materials aufrechterhalten wird.

3. Verfahren nach Anspruch 1 oder 2, dadurch gekennzeichnet, daß der Prägestempel (11,24) zusätzlich gekühlt wird.

4. Verfahren nach Anspruch 1 oder 2, dadurch gekennzeichnet, daß mit dem durch den Prägestempel (11,24) in eine Vertiefung (6) oder Durchbrechung (13) eingedrückten plastifizierten Material die Vertiefung oder die Durchbrechung vollständig ausgefüllt wird.

5. Verfahren nach Anspruch 1, dadurch gekennzeichnet, daß das aus der Wandung des Profils geformte und in die Durchbrechungen (13) des Verbinders eingedrückte Material an der Innenseite einen den Rand der Durchbrechung hintergreifenden Kopf (14) bildet.

**Claims**

1. A method of making a comer or T-joint between two hollow chamber plastics members of a window or a door, wherein a comer or T-connector (3, 17, 27) is provided in the connecting regions with at least one recess (6) or opening (13) and introduced into the internal chamber of a plastics frame member (15, 16) or a bar member (2) and the wall of the frame or bar member, rich is adjacent the recess or opening in the connector, is plasticised by means of a heated punch (10) and the plasticised material is pressed by means of a pressing punch (11) into the recess (6) or opening (13) in the connector and kept under pressure and in the inwardly shaped position during the cooling phase by the pressing punch (11) and the pressing punch (11) is withdrawn into its starting position after the plasticised material has set.

2. A method of making a comer or T-joint between two hollow chamber plastics members of a window or a door wherein a comer or T-connector which is made from thermoplastic material is introduced into the internal chamber of a plastics frame or bar member and both the wall material of the frame or bar member and also a portion of the adjacent wall material of the connector (3) is plasticised at the intended connecting locations by means of a heated punch (20) and the plasticised materials of the walls of the member and the connector are connected together under a pressure loading by means of a pressing punch (24) and cooled to the setting temperature, and the pressure loading on the plasticised material of the frame or bar member, which has been shaped into the connector, is maintained by means of the pressing punch (11, 24) until the plasticised material has set.

3. A method according to claim 1 or claim 2 chacterised in that the pressing punch (11, 24) is additionally cooled.

4. A method according to claim 1 or claim 2 chacterised in that the recess (6) or the opening (13) is completely filled with the plasticised material which is pressed into the recess or opening by the pressing punch (11, 24).

5. A method according to claim 1 chacterised in that the material which is formed out of the wall of the member and pressed into the openings (13) in the connector forms at the inside a head (14) which engages behind the edge of the opening.

**Revendications**

1. Procédé pour la réalisation d'un assemblage d'angle ou en T entre deux profilés creux en matière plastique d'une fenêtre ou d'une porte, dans lequel un raccord d'angle ou en T (3, 17, 27) est pourvu, dans les zones d'assemblage, d'au moins une partie creuse (6) ou un ajour (13), est introduit dans la chambre intérieure d'un profilé de cadre en matière plastique (15, 16) ou d'un profilé de traverse (2) et la paroi du profilé de cadre ou de traverse, voisine de la partie creuse ou de l'ajour du raccord, est rendue plastique au moyen d'un poinçon (10) chauffé et la matière rendue plastique est pressée, au moyen d'un poinçon d'estampage (11) dans la partie creuse (6) ou l'ajour (13) du raccord et, pendant la phase de refroidissement, est maintenue sous pression et dans la position moulée à l'intérieur, par le poinçon d'estampage (11), et le poinçon d'estampage (11) est replacé dans sa position initiale, après solidification de la matière rendue plastique.

2. Procédé pour la réalisation d'un assemblage d'angle ou en T entre deux profilés creux en matière plastique d'une fenêtre ou d'une porte, dans lequel un raccord d'angle ou en T, réalisé dans une matière thermoplastique, est introduit dans la chambre intérieure d'un profilé de cadre ou de traverse en matière plastique et dans lequel, aux points d'assemblage prévus, la matière de la paroi du profilé de cadre ou de traverse ainsi qu'une partie de la matière de la paroi voisine du raccord (3), est rendue plastique au moyen d'un poinçon (20) chauffé et les matières rendues plastiques des parois du profilé et du raccord, sont assemblées entre elles, par pression, au moyen d'un poinçon d'estampage (24) et refroidies à la température de solidification et dans lequel la pression exercée sur la matière rendue plastique et la matière moulée à l'intérieur du raccord, du profilé de cadre ou de traverse, est maintenue au moyen du poinçon d'estampage (11, 24), jusqu'à solidification de la matière rendue plastique.

3. Procédé selon la revendication 1 ou 2, caractérisé en ce que le poinçon d'estampage (11, 24) est en outre refroidi.

4. Procédé selon la revendication 1 ou 2, caractérisé en ce que la partie creuse ou l'ajour est totalement rempli avec la matière rendue plastique, pressée dans une partie creuse (6) ou un ajour (13), par le poinçon d'estampage (11, 24).

5. Procédé selon la revendication 1, caractérisé en ce que la matière formée à partir de la paroi du profilé et pressée à l'intérieur des ajours (13) du raccord, forme sur le côté intérieur, une tête (14) passant derrière le bord de l'ajour.

*Fig. 1*

Fig. 2

Fig. 3

Fig. 4

Fig. 5

Fig. 6

Fig. 7